(19) **Europäisches Patentamt / European Patent Office / Office européen des brevets**

(11) **EP 2 686 940 B1**

(12) **FASCICULE DE BREVET EUROPEEN**

(45) Date de publication et mention
de la délivrance du brevet:
**18.08.2021 Bulletin 2021/33**

(21) Numéro de dépôt: **12710686.2**

(22) Date de dépôt: **16.03.2012**

(51) Int Cl.:
*H02K 21/12* (2006.01)  *H02K 29/08* (2006.01)
*H02K 1/14* (2006.01)  *H02K 1/18* (2006.01)
*H02K 16/02* (2006.01)  *H02K 11/33* (2016.01)

(86) Numéro de dépôt international:
**PCT/EP2012/054677**

(87) Numéro de publication internationale:
**WO 2012/123575 (20.09.2012 Gazette 2012/38)**

(54) **MOTEUR ELECTRIQUE ET INSTALLATION DE FERMETURE OU PROTECTION SOLAIRE D'UN FENETRE COMPRENANT UN TEL MOTEUR**

ELEKTROMOTOR UND VERWENDUNG EINES SOLCHEN MOTORS BEI EINER SCHLIESS- ODER SONNENSCHUTZEINRICHTUNG EINES FENSTERS

ELECTRIC MOTOR AND USE OF SUCH A MOTOR IN A WINDOW CLOSING OR SUN PROTECTION INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2011 FR 1152210**
**17.03.2011 FR 1152200**
**17.03.2011 FR 1152211**
**17.03.2011 FR 1152215**

(43) Date de publication de la demande:
**22.01.2014 Bulletin 2014/04**

(73) Titulaire: **SOMFY ACTIVITES SA**
**74300 Cluses (FR)**

(72) Inventeurs:
• **CAVAREC, Pierre-Emmanuel**
**F-74130 Mont Saxonnex (FR)**
• **DUPIELET, Norbert**
**F-74700 Sallanches (FR)**
• **MARAVAL, Frédéric**
**F-74190 Passy (FR)**

(74) Mandataire: **Lavoix**
**62, rue de Bonnel**
**69448 Lyon Cedex 03 (FR)**

(56) Documents cités:
EP-A1- 1 075 072  WO-A1-00/48297
DE-A1-102006 038 576  DE-U- 7 018 060
JP-A- 2003 088 068  US-A- 3 153 157
US-A1- 2006 087 188  US-A1- 2007 126 303

• **None**

## Description

DOMAINE TECHNIQUE

L'invention relève du domaine des actionneurs électromécaniques permettant le pilotage motorisé des éléments d'occultation ou de protection solaire dans un bâtiment, tels que des stores. En particulier, elle concerne un moteur dont les dimensions radiales sont réduites pour être intégré à un actionneur tubulaire.

L'invention se rapporte en particulier au domaine des moteurs électriques synchrones à commutation électronique de faible puissance. De tels moteurs doivent présenter un couple important sous un faible encombrement radial, leur permettant d'être intégré dans un tube d'enroulement de store ou dans caisson à section sensiblement rectangulaire, par exemple un rail de store vénitien.

Ces dimensions particulières incitent à réaliser des moteurs longs, la longueur du moteur compensant sa faible section pour obtenir la puissance nécessaire à l'entraînement de l'élément d'occultation ou de protection solaire.

ART ANTERIEUR

Les moteurs utilisés actuellement pour ces applications sont des moteurs à courant continu (DC) à balais, comprenant un rotor bobiné et un stator à aimants permanents en ferrite. Le rotor est relié à un collecteur tournant. Le courant est injecté via les balais au collecteur. Ce type de moteur est couramment remplacé par des moteurs dits brushless, fonctionnant sans balais. Ceux-ci comprennent un stator bobiné tandis que les aimants sont placés sur le rotor. Un système électronique de commande doit assurer la commutation du courant dans les enroulements statoriques.

Ce type de moteur est utilisé notamment en aéromodélisme, pour des lecteurs/graveurs de DVD ou pour des petits ventilateurs.

Il est connu de US-A-4 556 809 d'équiper le rotor d'un moteur électrique de disques équipés d'aimants destinés à coopérer avec un stator, s'étendant sous forme d'un cylindre autour des disques du rotor. L'épaisseur du stator augmente la largeur radiale du moteur.

La demande JP-A-2003/088068 décrit un moteur électrique ou dynamo comprenant deux disques rotors montés sur un même arbre, et entre lesquels est placé un ensemble de barres munis chacun d'un enroulement de cuivre pour former le stator. Les aimants permanents sont placés face aux bobinages sur les faces des disques rotors tournées l'une vers l'autre. La disposition choisie vise à améliorer le procédé complexe de production des enroulements, notamment le stator cylindrique précité, et permet de réduire les déchets de production. Un empilement de deux structures l'une sur l'autre permet de produire une quantité d'électricité importante.

La structure représentée dans ce document n'est cependant pas adaptée à être intégrée dans un tube d'actionneur, ces dimensions axiales et radiales sont quasiment équivalentes dans le cas d'une simple structure. L'empilement de deux structures permet de réaliser un moteur plus allongé mais l'objectif de cet empilement n'est pas de réduire l'encombrement radial, mais de produire une quantité plus importante d'énergie.

Il est connu de DE-A-10 2006 038 576 de juxtaposer longitudinalement, le long d'un axe de rotation d'un rotor, les phases d'un moteur électrique. Ceci permet de réduire son diamètre mais au détriment de la longueur du moteur, celui-ci étant constitué d'une succession de blocs comprenant chacun une bobine et les deux paliers correspondants, pour constituer chaque phase du moteur. Par ailleurs, la bobine étant enroulée autour d'un arbre du rotor, le procédé de fabrication et d'assemblage est complexe.

D'autre part US-A-3153157 divulgue un moteur électrique équipé d'un corps porteur avec une portion tubulaire centrale et deux flasques. Ce moteur électrique comprend un rotor avec deux roues magnétiques entre lesquelles est disposé le corps porteur, ce qui diminue la longueur utile pour les bobinages du stator. L'invention propose donc d'améliorer les dispositifs existants pour définir une structure de moteur électrique dédiée à des actionneurs tubulaires avec les objectifs suivants :

- encombrement réduit, en particulier en ce qui concerne l'encombrement radial
- amélioration du niveau sonore
- production de couple à vitesse réduite avec de l'inertie rotor
- facilité de bobinage.

RESUME DE L'INVENTION

A cet effet, l'invention concerne un moteur électrique selon la revendication 1.

Grâce à l'invention, le montage du moteur est facilité dans la mesure où les barres du stator peuvent être installées indépendamment les unes des autres dans la structure porteuse autour du rotor, lors de l'assemblage du moteur. En outre, des roulements supportant le rotor par rapport au stator peuvent être disposés à l'extérieur de la zone de flux magnétique entre le rotor et les stators, ce qui évite les perturbations, ces roulements pouvant être alors des roulements métalliques. Le montage de la structure, et en particulier des roulements supportant celle-ci, à l'extérieur des disques est également plus simple qu'un montage sur l'arbre entre les disques. Comme la portion externe formée par les barres conductrices s'étend axialement à l'extérieur des disques et jusqu'au niveau de la structure porteuse, cette portion externe remplit à la fois la fonction magnétique permettant la fermeture du flux magnétique selon une direction radiale en regard des aimants permanents et une fonction mécanique d'appui sur la structure porteuse.

Selon des aspects avantageux mais non obligatoires de l'invention, un tel moteur peut incorporer une ou plusieurs des caractéristiques des revendications dépendantes.

Par ailleurs, l'invention concerne une installation de fermeture ou de protection solaire comprenant un écran de fermeture et un ensemble de motorisation ainsi qu'un ensemble de motorisation comprend un moteur tel que mentionné ci-dessus.

Une telle installation est plus économique à fabriquer et plus simple à mettre en service que celles de l'état de la technique.

DESCRIPTION DES FIGURES

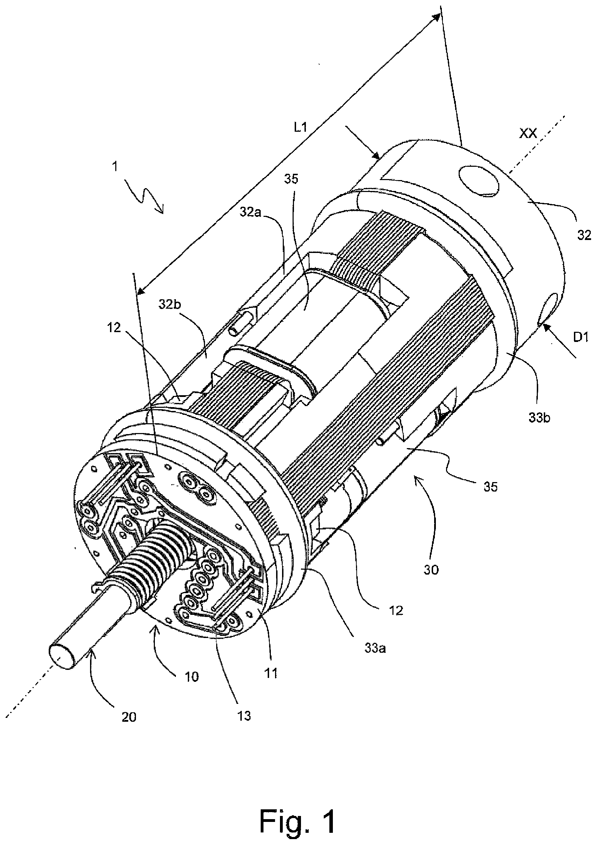

La figure 1 montre une vue générale en perspective d'un moteur selon l'invention.

La figure 2 montre une vue isolée en perspective du rotor du moteur de la figure 1.

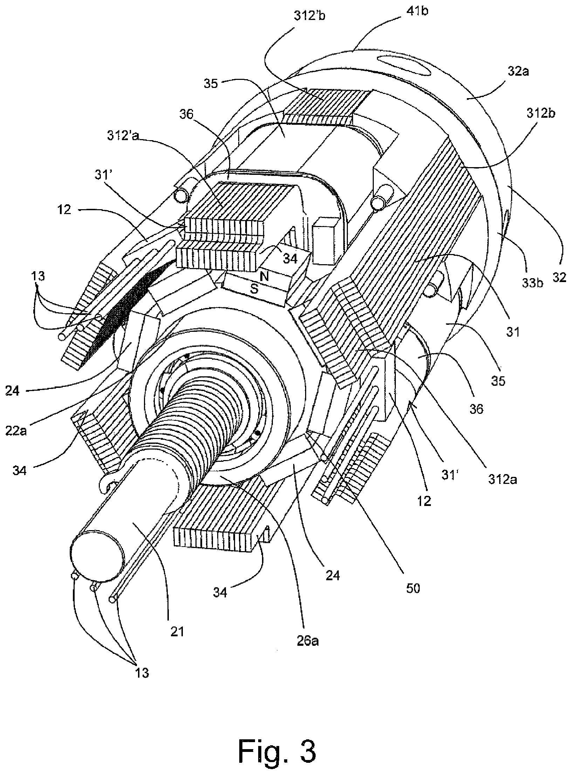

La figure 3 montre une vue partielle en perspective du moteur de la figure 1 permettant de visualiser l'arrangement intérieur de différentes pièces du moteur, telles que des roulements, des capteurs, des aimants et le rotor.

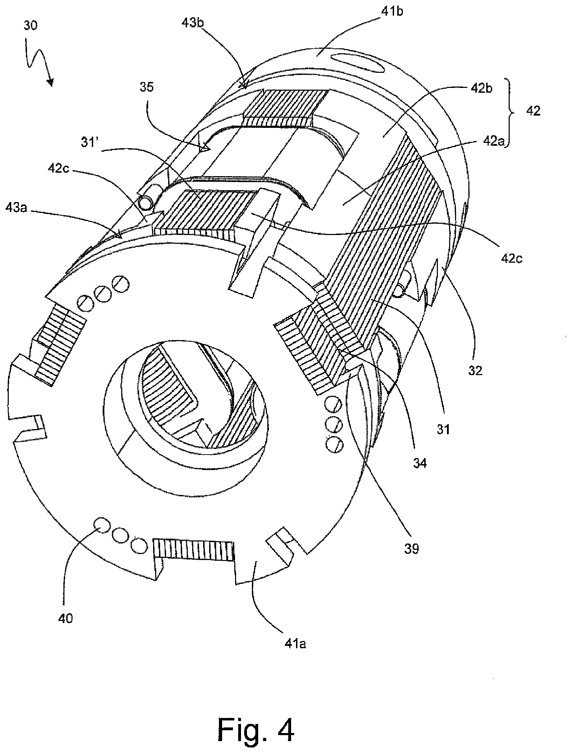

La figure 4 est une vue isolée en perspective du stator du moteur.

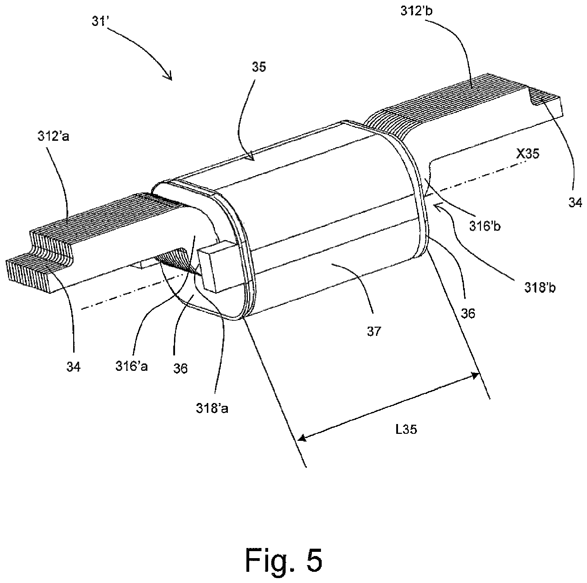

La figure 5 est une vue isolée en perspective d'une partie du stator prenant la forme d'une barre coudée.

La figure 6 est une coupe axiale schématique d'une partie des éléments du moteur.

DESCRIPTION D'UN MODE DE REALISATION

Le moteur 1, conforme à l'invention et représenté sur les figures, est un moteur brushless synchrone. Il comprend une unité électronique de pilotage 10, un rotor 20 ainsi qu'un stator 30. Le moteur a une structure allongée. Sa longueur L1, mesurée parallèlement à un axe XX de rotation du rotor 20, est au moins égale à deux fois son diamètre maximal D1 mesuré radialement par rapport à cet axe. En particulier, un moteur de diamètre D1 égal environ 22 mm, pour une longueur L1 de 45 à 50 mm sera particulièrement bien adapté pour l'entraînement d'un store d'intérieur. L'unité électronique de pilotage 10 comprend un circuit imprimé 11 situé à l'une des extrémités du moteur et un ensemble de capteurs 12, par exemple des sondes à effet Hall, disposés à l'intérieur de la structure du moteur 1 et montés sur le circuit imprimé 11 grâce à des pattes 13. Les capteurs sont tous similaires.

Chaque composant 20 et 30 du moteur est représenté et décrit indépendamment ci-après.

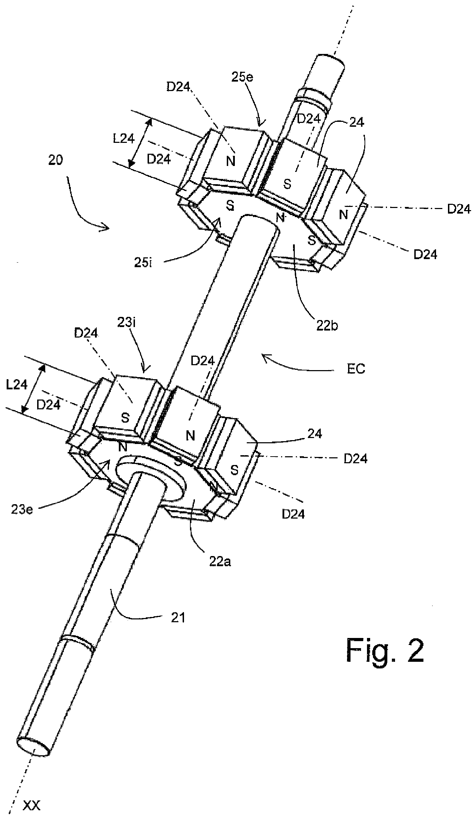

La figure 2 représente un mode de réalisation du rotor 20. Le rotor a une structure en forme « d'haltère », comprenant un arbre rotor 21 ainsi que deux disques rotoriques 22a et 22b montés sur l'arbre. Le terme « disque » désigne ici une structure annulaire de forme cylindrique, dont l'épaisseur axiale peut être faible devant son diamètre, en pratique inférieure à 50%, de préférence inférieure à 25% de ce diamètre. Les deux disques sont fixes en rotation sur l'arbre. L'arbre rotor définit l'axe longitudinal XX du moteur. Les différents éléments composant le moteur sont centrés autour de cet axe XX qui est aussi l'axe de rotation du rotor 20. L'arbre rotor 21 définit, à une de ses extrémités, l'arbre de sortie du moteur 1.

Chaque disque rotorique 22a ou 22b comprend un ensemble d'aimants 24 en nombre pair. Les aimants sont orientés radialement, de manière à créer des flux essentiellement radiaux. En d'autres termes, une droite D24 allant du pôle Nord au pôle Sud d'un aimant, qui représente la direction de polarité de cet aimant, s'étend selon une direction radiale par rapport à l'axe XX. Les pôles N et S de certains des aimants sont indiqués sur la figure 2 pour indiquer la direction de polarité des aimants. Les aimants de chaque disque sont disposés successivement en opposition. Les pôles de deux aimants 24 adjacents d'un même disque ont des configurations opposées. Ainsi, lorsqu'un aimant a son pôle Nord dirigé vers l'axe XX et son pôle Sud à l'opposé, les deux aimants adjacents ont leurs pôles Sud dirigés vers l'axe XX et leurs pôles Nord à l'opposé, et réciproquement. Les aimants des deux disques sont également disposés en opposition les uns par rapport aux autres. En d'autres termes, deux aimants 24 situés dans le même secteur angulaire des disques 22a et 22b par rapport à l'axe XX ont leurs pôles en configuration opposées.

On note L24 la longueur axiale d'un aimant 24, c'est-à-dire sa dimension selon l'axe XX. Celle-ci est sensiblement égale à l'épaisseur axiale des disques du rotor. Cette dimension est plus faible dans le cas d'utilisation d'un aimant en néodyme par rapport à un aimant en ferrite, mais ces différentes solutions sont envisageables.

On relève que les faces des aimants tournées à l'opposé de l'arbre 21 sont parallèles à l'axe XX. En d'autres termes, le diamètre moyen d'un disque 22a ou 22b équipé de ses aimants 24 est constant selon une direction parallèle à l'axe XX.

Dans ce mode de réalisation, les aimants sont rectangulaires. Ils peuvent être montés sur une face interne 23i, 25i d'un disque tournée vers l'autre disque ou sur le pourtour extérieur 27 de chaque disque, comme représenté sur la figure 2. Dans ce cas, le pourtour extérieur de chaque disque n'est pas circulaire, mais polygonal et présente des zones planes pour le positionnement des aimants 24 qui sont de forme parallélépipédique. Cette configuration limite l'encombrement axial nécessaire pour le montage des aimants et permet l'utilisation d'aimants simples disponibles dans le commerce.

En variante, la périphérie externe des disques 22a et 22b est sensiblement circulaire et les aimants 24 ont une structure courbe adaptée à cette périphérie.

Dans une autre variante, la périphérie externe est recouverte par un matériau magnétique, de sorte à former une aimantation monobloc annulaire, ayant les mêmes propriétés que la pluralité d'aimants décrite ci-dessus.

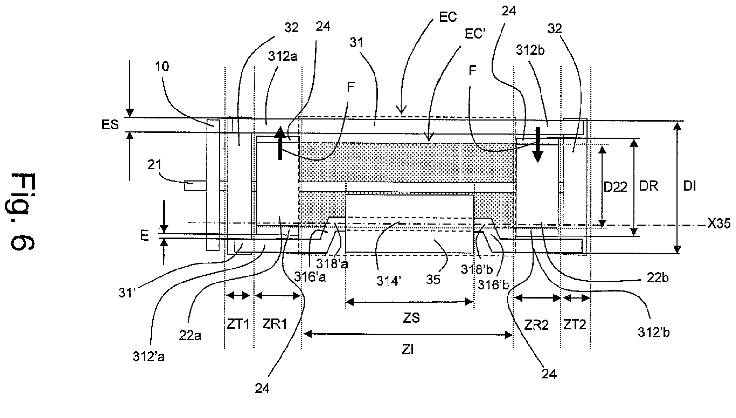

De plus, l'orientation radiale des aimants du rotor crée un flux magnétique radial F important, qui est directement capté par l'ensemble de capteurs 12 de l'unité électronique de pilotage 10. Les capteurs 12 sont en effet disposés directement en regard des aimants 24. Les capteurs 12 peuvent être alignés avec les aimants 24 selon une direction parallèle à l'axe XX. Alternativement, d'autres moyens de détection de la rotation du rotor peuvent être mis en place, par exemple un codeur, si l'on envisage de ne pas monter des capteurs au niveau de la structure moteur. Le flux F interagit également avec le stator 30, comme expliqué ci-dessous, en particulier en lien avec la figure 6.

Le stator magnétique 30 comprend plusieurs barres statoriques 31, 31' disjointes, c'est-à-dire indépendantes les unes des autres, montées sensiblement parallèles à l'axe XX du moteur et réparties régulièrement autour de cet axe. Les barres sont maintenues par une structure de support ou structure porteuse 32 préférentiellement en deux parties 32a et 32b, s'emboîtant axialement l'une dans l'autre. La structure porteuse est maintenue en place autour de l'arbre 21 du rotor 20, avec possibilité de rotation relative, au moyen de roulements 50 précontraints sur l'arbre 21. Ces roulements sont précontraints axialement et situés au plus près des disques rotoriques pour supporter au mieux les efforts radiaux, au plus près de la section où ils sont générés, et à l'extérieur de ceux-ci, autrement dit du côté des faces externes 23e, 25e des disques 22a et 22b, rendant ainsi la structure rigide. En pratique, les roulements 50 sont montés contre les faces externes 23e et 25e des disques 22a et 22b. La structure porteuse 32 permet de limiter les risques de fléchissement de l'arbre rotor si celui-ci est allongé, dans la mesure où la longueur susceptible de fléchir est limitée.

Les différentes barres 31, 31' du stator sont constituées par des paquets de tôles assemblées et munies à leurs extrémités d'une indentation 34. Cette indentation 34 constitue une zone de moindre épaisseur radiale, vis-à-vis de l'axe XX, par rapport aux autres parties des barres 31 et 31'. Cette indentation constitue la partie par laquelle les barres 31 et 31' se positionnent sur la structure porteuse 32. En variante ou en complément, des zones de moindre épaisseur radiale peuvent être prévues dans les barres 31 et 31' au droit des disques 22a et 22b, c'est-à-dire au même niveau que ces disques le long de l'axe XX.

Les indentations 34 permettent qu'une partie de la structure porteuse 32 entoure radialement les parties 312a, 312b, 312'a, 312'b des barres 31 et 31' sans augmenter le diamètre maximum de la structure 32 ou le diamètre externe D1 du moteur par rapport à la distance radiale maximale entre les barres 31 et 31' et l'axe XX. Ainsi, le diamètre de la structure porteuse 32 peut être sensiblement égal, voire inférieur, à celui du stator 30.

En variante, les barres 31 et 31' peuvent être réalisées dans un matériau magnétiquement conducteur autre que de la tôle.

Une portion des barres 31 et 31' du stator 30 s'étend en regard des aimants 24, parallèlement à l'axe XX et au niveau de chaque disque du rotor, ménageant un entrefer E entre elles et les aimants. On note respectivement 312a et 312b les parties des barres 31 qui sont disposées axialement, le long de l'axe XX, au niveau des aimants 24 des disques 22a et 22b. De la même façon, on note 312'a et 312'b les parties des barres 31' qui sont disposées axialement, parallèlement à l'axe XX, au niveau des aimants 24 des disques 22a et 22b. Les parties 312a, 312b, 312'a et 312'b sont disposées radialement au delà des aimants 24, par rapport à l'axe XX central.

Au moins au niveau des aimants 24, les parties 312a, 312b, 312'a et 312'b ont une section appropriée pour maintenir un entrefer E constant vis-à-vis des aimants 24. En particulier, pour des aimants rectangulaires disposés sur des faces planes adjacentes réalisées à la circonférence externe de chaque disque du rotor, les barres sont sensiblement parallélépipédiques.

Dans le cas où les aimants à la circonférence des disques du rotor forment une surface annulaire, les paquets de tôles constitutifs des barres 31 et 31' peuvent être usinés et assemblés de manière à former une section de barre sensiblement en forme d'arc de cercle, de sorte à maintenir un entrefer E constant avec les aimants à la périphérie externe des disques. Cet autre mode de réalisation n'est pas représenté.

Les barres 31 et 31' peuvent se répartir en deux catégories : celles d'un premier type 31 sont parallèles à l'axe XX du moteur et sont sensiblement rectilignes. Celles d'un deuxième type 31' servent chacune de support à une bobine 35 appartenant au stator 30. Chaque bobine 35 est constituée d'un enroulement de spires de cuivre 37 entre deux flasques 36. Les barres 31' supportant les bobines sont de préférence coudées, avec une partie 314' rectiligne et déportée vers l'axe XX. Plus précisément, chaque barre 31' comprend deux parties de liaison 316'a et 316'b obliques par rapport à l'axe XX et qui relient respectivement les parties 312'a et 312'b à la partie 314' qui est parallèle à l'axe XX. Une bobine 35 est montée autour de chaque partie 314'. Les bobines 35 sont ainsi décalées vers l'axe XX du moteur, par rapport au diamètre extérieur des disques 22a et 22b. Ceci diminue le diamètre maximum D1 du moteur par rapport au cas où les barres 31' seraient rectilignes.

Une fois l'assemblage du stator 30 terminé, les bobines 35 affleurent à la surface externe de la structure de support 32. De plus, les coudes 318'a, 318'b des barres 31', qui relient les parties 316'a et 316'b à la partie 314', maintiennent les flasques 36 et les enroulements 37 en place sur ces barres, sans qu'aucune autre pièce de fixation ne soit nécessaire.

On note L35 la longueur axiale, mesurée parallèlement à l'axe XX, d'une bobine 35.

En pratique, le stator comprend six barres statoriques 31 et 31', dont trois seulement, à savoir les barres 31', supportent des bobines 35. L'utilisation d'un stator à trois ou six bobines permet des oscillations de couple réduites par rapport à une structure diphasée. Le rapport entre le nombre d'aimants 24 et le nombre de bobines 35 est une donnée connue de l'état de l'art. Ici, on retrouve huit aimants pour trois ou six bobines.

On note $X35$ l'axe central de bobinage d'une bobine 35. Cet axe est parallèle à l'axe XX et décalé radialement par rapport à celui-ci, de sorte que chaque bobine 35 est disposée, par rapport à l'axe XX, dans un secteur angulaire distinct de celui qui reçoit les barres 31 ou les autres bobines 35.

Les barres bobinées 31' sont disposées, autour de l'axe XX, en alternance avec les barres non bobinées 31. En variante et si le diamètre D1 le permet, toutes les barres supportent des bobines.

Le volume occupé par les bobines 35 est situé au moins partiellement axialement entre les disques 22a et 22b, ce qui permet de réduire le diamètre maximum D1 du moteur 1, tandis que les supports de ces bobines, à savoir les barres statoriques 31', sont maintenus en partie en dehors de ce volume.

Les deux parties 32a, 32b de la structure porteuse 32, en matériau amagnétique, comprennent chacune un cylindre de support 41a, 41b et des demi-bras 42a, 42b, dont certains viennent s'emboîter, parallèlement à l'axe XX, dans ceux de l'autre partie pour former des bras 42 encadrant au moins partiellement certaines des barres statoriques 31 et 31'. Le cylindre 41a, 41b de chaque partie 32a, 32b comprend une gorge périphérique 43a, 43b et des logements 39 pour les extrémités des barres statoriques 31. Les logements 39 sont situés soit à la périphérie du cylindre 41a ou 41b de la structure de support 32, soit au fond d'une gorge. Les extrémités des barres 31, en particulier les extrémités indentées de moindre épaisseur radiale, s'insèrent dans ces logements pour permettre une reprise des efforts de rotation. Ceux-ci sont donc repris au plus près des roulements, les cylindres de support 41a et 41b recouvrant les roulements 50.

Les gorges 43a et 43b peuvent accueillir des joints toriques 33a et 33b qui participent au maintien de la structure et à sa suspension dans un carter de moteur non représenté. Pour cela, la section des joints est légèrement supérieure à la profondeur des gorges, de manière à ce que les joints dépassent de celles-ci. Autrement dit, le diamètre extérieur des joints est supérieur à celui de la structure de support.

Les bras 42a et 42b participent également à la reprise des efforts, mais ne sont pas indispensables, la distance entre les cylindres 41a et 41b des deux parties de la structure de support 32 pouvant être simplement fixée par la longueur des barres statoriques 31.

De manière similaire, les extrémités des barres 31' sont également tenues en rotation par la structure de support. Pour ne pas trop fragiliser les cylindres de support, il est prévu que ces barres soient maintenues par des plots 42c s'étendant depuis un cylindre de support 41a ou 41b vers l'autre cylindre de support. Ces plots forment deux à deux, comme précédemment, des logements de maintien des extrémités des barres 31' et permettent la reprise des efforts radiaux exercés par ces barres. Alternativement, toutes les barres statoriques 31 et 31' pourraient être maintenues de la même manière.

Le cylindre 41a comprend également des orifices 40 pour le passage des pattes 13 des capteurs 12 depuis le circuit imprimé vers les aimants 24 du rotor. En variante, des parties des capteurs 12 autres que leurs pattes passent à travers les ouvertures 40. Les capteurs 12 sont disposés de manière alternée, entre deux extrémités de barres statoriques, évitant ainsi toute surépaisseur au niveau de leur agencement dans le moteur 1.

La figure 6 permet de mieux comprendre l'agencement des éléments composant la structure du moteur 1 et les flux qui en découlent.

En particulier, les mesures et zones suivantes sont définies et représentées :

Le diamètre idéal DI du moteur 1 est égal à la somme du diamètre maximal DR du rotor 20 (diamètre d'un disque rotor et épaisseur des aimants), de deux fois l'épaisseur maximale ES d'une partie 312a, 312b, 312'a ou 312'b d'une barre 31 ou 31' du stator 30, au niveau des disques 22a et 22b, et de deux fois l'entrefer E. Il est donc régi par l'équation

$$DI = DR + 2 \times ES + 2 \times E$$

Ce diamètre idéal DI peut être égal ou légèrement inférieur au diamètre maximal externe D1 du moteur sans son carter. En effet, ce diamètre idéal DI peut être augmenté, d'une légère surépaisseur de la structure de support 32 par rapport aux barres statoriques 31 et 31' et/ou d'une partie de la section des joints toriques 33a et 33b, pour définir le diamètre D1.

La section des bobinages ou enroulements 37 n'intervient pas dans ce calcul de diamètre, dans la mesure où les bobines 35 sont complètement intégrées dans l'espace cylindrique EC défini entre les disques rotor 22a et 22b, le long de l'axe XX. Cet espace cylindrique EC est centré sur l'axe XX de l'arbre rotor 21. Il est délimité à ses extrémités par les deux faces internes 23i et 25i des disques 22a et 22b et a pour diamètre le diamètre idéal DI défini ci-dessus.

On définit un espace EC' entre les disques rotor 22a et 22b, le long de l'axe XX. Cet espace cylindrique est également centré sur l'axe XX et délimité à ses extrémités par les faces 23i et 25i. Il a pour diamètre le diamètre nominal D22 des disques 22a et 22b, sans les aimants. L'espace EC' est représenté en grisé à la figure 6. Il est inclus dans l'espace EC.

Une partie du stator, à savoir les barres statoriques 31 et 31', plus précisément leurs parties 312a, 312b, 312'a et 312'b, s'étend au droit des disques 22a et 22b, et se prolonge de part et d'autre de chaque disque rotor, à l'opposé de l'espace EC, pour être maintenue à l'extérieur des disques rotor.

Une autre partie du stator 30, à savoir les parties 314', 316'a, 316'b des barres statoriques 31 et les bobines 35, que l'on peut qualifier d'interne, est partiellement logée dans l'espace EC', c'est-à-dire entre les disques 22a et 22b et plus près de l'axe XX que les aimants 24.

En variante, la totalité de la partie interne du stator peut être reçue dans l'espace EC'.

Ainsi, le long de l'axe XX du moteur peuvent être définies une première zone ZT1 de tenue mécanique des barres 31 et 31', une première zone ZR1 de disque rotor, une zone interne ZI (dans laquelle se situe une zone de bobinage stator ZS), joignant les faces internes des disques rotor et dont la longueur correspond aux espaces EC et EC', puis une deuxième zone ZR2 de disque rotor et une deuxième zone ZT2 de tenue mécanique.

Deux flèches symbolisent à la figure 6 une partie du flux F circulant entre les aimants 24 du rotor 20 et les barres 31 et 31' du stator 30. Ce flux radial est conduit le long des barres métalliques, d'un disque 22a ou 22b vers l'autre disque. Les pertes de flux sont très faibles du fait de la présence de chemins de flux préférentiel constitués par les barres 31 et 31' et de l'absence d'autres éléments conducteurs, par exemple des éléments de support pour le stator dans l'espace cylindrique EC, qui pourraient perturber ce flux.

En effet, si les roulements étaient disposés dans cet espace, ils pourraient interagir avec le flux magnétique, sauf à utiliser des roulements amagnétiques, par exemple des roulements en céramique, plus coûteux.

Les bobines 35 sont situées principalement dans l'espace cylindrique rotor EC et partiellement dans l'espace EC', mais dans un plan différent de celui des disques rotor 22a et 22b. Le rotor 20 et le stator 30 peuvent donc être dimensionnés de manière partiellement indépendante : leurs sections et longueurs peuvent être dimensionnées indépendamment. En particulier, la longueur des bobines 35, le long de l'axe XX, est adaptable sans modifier le diamètre D1 du moteur 1. Le nombre de spires d'enroulements 37, et donc la valeur d'Amp.tr, peut donc être augmenté pour augmenter le couple obtenu sur le rotor. L'épaisseur axiale des disques rotor 22a et 22b, et donc des aimants 24 peut également être adaptée pour augmenter le flux F. En d'autres termes, la longueur axiale L35 des bobines 35 est indépendante de la géométrie du rotor, notamment de la longueur axiale L24 des aimants 24, et vice-versa.

Ainsi, l'invention confère au concepteur d'un moteur électrique une grande liberté quant au choix de la longueur des enroulements 37 et au choix de la largeur des aimants 24, ce qui permet d'ajuster le couple induit sur le rotor et le flux magnétique transmis entre le stator 30 et le rotor 20. A partir d'une même configuration de base et un pour un même diamètre maximum D1, il est donc possible d'obtenir une gamme de plusieurs couples de sortie pour le moteur. Le moteur 1 a donc une structure modulaire très intéressante, qui est particulièrement avantageuse pour la production d'une gamme de moteurs différents, avec le même diamètre maximum D1.

En outre, en faisant varier le diamètre nominal D22 ou le diamètre extérieur DR des disques 22a et 22b, on peut également faire varier le couple de sortie du moteur qui est proportionnel au carré de ce diamètre.

L'entrefer E, réalisé entre les barres 31 et 31' du stator 30 et les aimants 24 du rotor 20, lorsqu'ils sont disposés radialement sur la périphérie des disques, est situé au plus grand rayon possible par rapport au diamètre extérieur D1 du moteur, ce qui permet d'optimiser le couple fourni par le moteur 1 par rapport au diamètre extérieur D1 du moteur. Il est ajustable facilement du fait de la chaîne de côtes très réduite.

Cette configuration a également pour avantage, outre la compacité du moteur 1 dont il est question ci-dessus, une bonne répartition des champs électromagnétiques selon des directions radiales et axiales. En particulier, l'orientation radiale des aimants en opposition crée un ensemble d'efforts auto-centrant sur le rotor 20, ce qui permet de stabiliser la structure du moteur 1, en particulier dans le cas où le nombre d'aimants et le nombre de barres du stator sont des nombres pairs. Ces efforts contribuent à une meilleure tenue des pièces les unes vis-à-vis des autres et facilitent le montage et l'insertion de la structure interne du moteur dans un carter cylindrique externe non représenté.

La multiplication des pièces constituant une structure de moteur telle que décrite, si elle facilite le montage et la production du moteur, augmente également les risques d'induire des vibrations parasites qui génèrent du bruit. Les solutions suivantes participent à l'amélioration des performances acoustiques du moteur, notamment pour réduire le bruit généré lors du fonctionnement :

- Les efforts magnétiques participent d'eux-mêmes au maintien de la structure : les flux axiaux entre pièces sont minimisés, au profit de flux radiaux F. Les éventuels efforts axiaux ou radiaux sont contrés par la présence des roulements 50, au plus près de l'endroit où ces efforts sont générés. La précontrainte des roulements permet également de diminuer les jeux axiaux.
- La structure coaxiale du moteur 1 a une chaîne de côte réduite, les jeux et efforts radiaux sont donc mieux maîtrisés.
- Les joints toriques 33a et 33b permettent de construire une structure autoportée et de créer une zone d'absorption des vibrations lorsque la structure du moteur est montée dans un carter. Ils s'insèrent au niveau des indentations 34 prévues aux extrémités des barres statoriques 31 et 31' et qui forment une gorge de retenue des joints toriques. De ce fait, le diamètre interne nécessaire du carter moteur est légèrement supérieur au diamètre de la structure DI.

- Il est également possible de prévoir de caler les extrémités des barres statoriques au niveau de leurs logements 39 dans la structure de support 32, en utilisant un matériau amortissant les vibrations et/ou en réduisant les jeux de montage.

Par ailleurs, les solutions suivantes participent à l'amélioration des performances du moteur, notamment en terme de couple :

- Les enroulements 37 peuvent être montés sur chacune des barres statoriques 31 et 31'. Pour optimiser l'espace pris par ces bobinages, chacun est alors positionné sur une demi-zone droite ou gauche dans la zone de stator ZS, en alternance autour de l'arbre rotor. Les barres 31 et 31' peuvent être coudées en conséquence. Elles sont alors dissymétriques, mais une même barre, selon son montage, peut servir à supporter un bobinage de demi-zone droite ou gauche.

- La section de chaque barre stator 31 ou 31' est avantageusement arrondie, par exemple en forme d'ovale, ce qui évite des arêtes saillantes et facilite le bobinage avec un diamètre optimisé : on augmente alors le nombre de spires d'une bobine 35 pour un même diamètre extérieur, en comparaison avec une barre de section carrée ou rectangulaire.

- Les barres stator 31 et 31' peuvent être réalisées différemment que par un empilage de plaques de tôle. En particulier, l'utilisation d'un matériau magnétique, comme par exemple de l'acier fritté, peut permettre de produire des barres de section arrondie, ce qui est plus difficilement réalisable en plaques de tôle.

Le moteur 1 tel que décrit présente un seul arbre de sortie. Cependant, la structure peut être réalisée de manière plus symétrique pour permettre de réaliser un moteur à double arbre de sortie. L'unité électronique de pilotage peut être positionnée d'un seul côté.

Le moteur 1 décrit ci-dessus est particulièrement avantageux pour être utilisé dans une installation de fermeture ou de protection solaire. Une installation de fermeture ou de protection solaire comprend un écran mobile, de type store enroulable ou store vénitien, voire porte, grille ou volet, mobile au moins entre une configuration déployée où il obture ou occulte une ouverture d'un bâtiment et une position enroulée, où il libère l'accès à cette ouverture. Le moteur 1 décrit ci-dessus peut être facilement intégré dans l'arbre d'enroulement d'une telle installation, tout en présentant une simplicité de montage et une fiabilité en fonctionnement particulièrement attractives. Ce moteur peut aisément être adapté à ses conditions d'utilisation, en ajustant la longueur axiale de la zone ZS, c'est-à-dire la longueur L35 des bobines 35, le diamètre D22 ou DR ou l'épaisseur des disques 22a et 22b du rotor.

## Revendications

1. Moteur électrique (1) comprenant un rotor (20) et un stator bobiné (30),
le rotor comprenant

   - un arbre (21) et
   - deux disques (22a, 22b) montés fixes en rotation sur l'arbre et équipés d'aimants permanents (24),

   une portion externe (312a, 312b, 312'a, 312'b) du stator s'étendant au niveau de chaque disque axialement, parallèlement à un axe (XX) de rotation du rotor et radialement au-delà de ce disque en partant de l'axe (XX),
   le stator (30) comprenant

   - une pluralité de barres (31, 31') disjointes qui sont réalisées dans un matériau magnétiquement conducteur et dont certaines parties forment la portion externe (312a, 312b, 312'a, 312'b) du stator, laquelle s'étend au niveau de chaque disque axialement, parallèlement à un axe (XX) de rotation du rotor et radialement au-delà de ce disque en partant de l'axe (XX), et
   - une structure porteuse (32) maintenant les barres fixes les unes par rapport aux autres, la structure porteuse étant montée avec possibilité de rotation sur l'arbre (21), axialement à l'extérieur des deux disques (22a, 22b),

   la portion externe (312a, 312b, 312'a, 312'b) du stator (30) s'étendant, parallèlement à l'axe (XX) de rotation du rotor, axialement à l'extérieur des disques (22a, 22b), jusqu'au niveau de la structure porteuse (32),
   au moins certaines (31') des barres métalliques étant coudées et supportant des bobines (35), les bobines étant au moins partiellement insérées dans un espace cylindrique (EC') ménagé, le long de l'axe (XX), entre les disques (22a, 22b) du rotor (20), cet espace cylindrique (EC') ayant un diamètre égal au diamètre (D22) de ces disques,
   la longueur (L35) des bobines (35), mesurée parallèlement à l'axe de rotation (XX) du rotor (20), étant indépendante de la longueur (L24) des aimants (24), mesurée parallèlement à cet axe, ou la partie interne (314', 316'a, 316'b, 35) du stator (30) comprenant au moins une bobine (35) enroulée autour d'une barre (31') en matériau magnétique qui définit également une partie au moins de la portion externe (312'a, 312'b) du stator, la barre (31') supportant la bobine (35) étant notamment coudée (318'a, 318'b) dans un sens où elle déporte la bobine (35) vers l'axe (XX) de rotation du rotor (20), par rapport à la portion externe (312'a, 312'b) du stator (30), ou chaque bobine (35) étant centrée sur un axe (X35) parallèle à l'axe de rotation (XX) et décalée radialement par rapport à celui-ci, chaque bobine étant disposée dans un secteur angulaire par rapport à l'axe de rotation,

le diamètre maximal externe (D1) du moteur (1) sans son carter étant égal ou légèrement supérieur à un diamètre idéal (DI), lui-même égal à la somme du diamètre maximal (DR) du rotor, de deux fois l'épaisseur maximale (ES) d'une partie externe (312a, 312b, 312'a, 312'b) d'une barre (31, 31') du stator au niveau des disques (22a, 22b) et de deux fois un entrefer (E) ménagé entre la partie externe du stator et les aimants (24) du rotor et

les barres (31, 31') ayant au moins une zone (34) de moindre épaisseur radiale, au niveau de leur partie de positionnement sur la structure porteuse (32) et/ou au droit des disques (22a, 22b) du rotor (20).

2. Moteur selon la revendication 1, **caractérisé en ce que** les aimants permanents (24) sont disposés avec leur direction de polarité (D24) orientée radialement par rapport à l'axe de rotation (XX) et **en ce que** les aimants (24) de l'un (22a) des disques sont disposés en opposition par rapport aux aimants (24) de l'autre disque (22b).

3. Moteur selon l'une des revendications précédentes, **caractérisé en ce que** les aimants (24) sont disposés sur la périphérie externe des disques (22a, 22b) du rotor (20) et **en ce que** la périphérie externe des disques (22a, 22b) du rotor (20) est polygonale, présentant des zones planes pour le positionnement d'aimants de forme parallélépipédiques.

4. Moteur selon l'une des revendications précédentes, **caractérisé en ce que** des capteurs (12) sont disposés de manière alternée, entre deux barres statoriques (31, 31').

5. Moteur selon l'une des revendications précédentes, **caractérisé en ce que** la partie interne (314', 316'a, 316'b, 35) du stator (20) s'étend en totalité dans un espace cylindrique (EC) ménagé le long de l'axe (XX), entre les disques (22a, 22b), cet espace cylindrique (EC) ayant un diamètre égal au diamètre externe (DI) du moteur (1).

6. Moteur selon l'une des revendications précédentes, **caractérisé en ce que** le stator (30) comprend une alternance de barres coudées (31') supportant chacune une bobine (35) déportée vers l'axe de rotation (XX) et de barres rectilignes (31) ne supportant aucune bobine.

7. Moteur selon l'une des revendications précédentes, **caractérisé en ce que** la structure porteuse (32) est en deux parties (32a, 32b) s'emboitant l'une dans l'autre, parallèlement à l'axe (XX) de rotation du rotor et **en ce que** la structure porteuse (32) est pourvue d'évidements localisés (39, 40) pour le passage de parties (13) de capteurs (12) et/ou le maintien de barres métalliques (31) appartenant au stator.

8. Moteur selon l'une des revendications précédentes, **caractérisé en ce que** la structure porteuse (32) comprend des plots (42c) encadrant une partie de certaines barres métalliques (31') au moins, pour la reprise d'efforts radiaux.

9. Moteur selon l'une des revendications précédentes, **caractérisé en ce qu'**il comprend au moins un joint élastique (33a, 33b), notamment un joint torique, dont le diamètre extérieur est plus grand que le diamètre externe de la structure porteuse, cette dernière comprenant au moins une gorge (43a, 43b) dans laquelle peut être positionné le joint.

10. Moteur selon l'une des revendications précédentes, **caractérisé en ce que** les barres (31, 31') ont une section adaptée aux aimants (24) de sorte à ce qu'un entrefer d'épaisseur sensiblement constante est ménagé entre une barre et un aimant lorsqu'ils sont en vis-à vis.

11. Moteur selon l'une des revendications précédentes, **caractérisé en ce que** le diamètre externe de la structure porteuse (32) est inférieur ou égal au diamètre externe du stator (30).

12. Installation de fermeture ou de protection solaire comprenant un écran de fermeture et un ensemble de motorisation, **caractérisée en ce que** l'ensemble de motorisation comprend un moteur (1) selon l'une des revendications précédentes.

**Patentansprüche**

1. Elektromotor (1), der einen Rotor (20) und einen gewickelten Stator (30) umfasst, wobei der Rotor umfasst

   - eine Welle (21) und
   - zwei Scheiben (22a, 22b), die drehfest auf der Welle montiert und mit Dauermagneten (24) ausgestattet sind,

   einen äußeren Abschnitt (312a, 312b, 312'a, 312'b) des Stators, der sich auf der Ebene jeder Scheibe axial, parallel zu einer Drehachse (XX) des Rotors und radial über diese Scheibe ausgehend von der Achse (XX) hinaus erstreckt,
   wobei der Stator (30) umfasst

   - eine Vielzahl getrennter Stangen (31, 31'), die aus einem magnetisch leitenden Material hergestellt sind und von welchen bestimmte Teile den äußeren Abschnitt (312a, 312b, 312'a, 312'b) des Stators bilden, der sich auf der Ebene jeder Scheibe axial, parallel zu einer Drehachse (XX) des Rotors und radial über diese Scheibe ausgehend von der Achse (XX) hinaus erstreckt, und

- eine Tragstruktur (32), die die Stangen stationär in Bezug zueinander hält, wobei die Tragstruktur drehbar auf der Welle (21) axial außerhalb der zwei Scheiben (22a, 22b) montiert ist,

wobei sich der äußere Abschnitt (312a, 312b, 312'a, 312'b) des Stators (30) parallel zu der Drehachse (XX) des Rotors axial außerhalb der Scheiben (22a, 22b) bis zu der Ebene der Tragstruktur (32) erstreckt, wobei bestimmte (31') der Metallstangen abgewinkelt sind und Spulen (35) tragen, wobei die Spulen mindestens teilweise in einen zylindrischen Raum (EC') eingesetzt sind, der entlang der Achse (XX) zwischen den Scheiben (22a, 22b) des Rotors (20) eingerichtet ist, wobei dieser zylindrische Raum (EC') einen Durchmesser gleich dem Durchmesser (D22) dieser Scheiben aufweist,
wobei die Länge (L35) der Spulen (35), parallel zu der Drehachse (XX) des Rotors (20) gemessen, von der Länge (L24) der Magnete (24), parallel zu dieser Achse gemessen, unabhängig ist, oder der innere Teil (314', 316'a, 316'b, 35) des Stators (30) mindestens eine Spule (35) umfasst, die um eine Stange (31') aus magnetischem Material aufgewickelt ist, die auch mindestens einen Teil des äußeren Abschnitts (312'a, 312'b) des Stators definiert, wobei die Stange (31'), die die Spule (35) trägt, insbesondere in eine Richtung abgewinkelt ist (318'a, 318'b) ist, in der sie die Spule (35) zu der Drehachse (XX) des Rotors (20) bezüglich des äußeren Abschnitts (312'a, 312'b) des Stators (30) verlagert, oder jede Spule (35) auf einer Achse (X35) parallel zu der Drehachse (XX) zentriert und radial bezüglich dieser verlagert ist, wobei jede Spule in einem Winkelsektor bezüglich der Drehachse angeordnet ist,
wobei der maximale Außendurchmesser (D1) des Motors (1) ohne sein Gehäuse gleich oder etwas größer ist als ein idealer Durchmesser (DI), der selbst gleich der Summe des maximalen Durchmessers (DR) des Rotors, zwei Mal der maximalen Dicke (ES) eines äußeren Teils (312a, 312b, 312'a, 312'b) einer Stange (31, 31') des Stators auf der Ebene der Scheiben (22a, 22b) und zwei Mal des Luftspalts (E), der zwischen dem äußeren Teil des Stators und den Magneten (24) des Rotors eingerichtet ist, ist, und die Stangen (31, 31') mindestens eine Zone (34) mit geringerer radialer Dicke auf der Ebene ihres Positionierungsteils auf der Tragstruktur (32) und/oder senkrecht zu den Scheiben (22a, 22b) des Rotors (20) aufweisen.

2. Motor nach Anspruch 1, **dadurch gekennzeichnet, dass** die Dauermagnete (24) mit ihrer Polungsrichtung (D24), die radial bezüglich der Drehachse (XX) ausgerichtet ist, angeordnet sind, und dass die Magnete (24) der einen (22a) der Scheiben entgegengesetzt bezüglich der Magnete (24) der anderen Scheibe (22b) angeordnet sind.

3. Motor nach einem der vorstehenden Ansprüche, **dadurch gekennzeichnet, dass** die Magnete (24) auf dem Außenumfang der Scheiben (22a, 22b) des Rotors (20) angeordnet sind, und dass der Außenumfang der Scheiben (22a, 22b) des Rotors (20) vieleckig ist, wobei er flache Zonen für die Positionierung von parallelepipedförmigen Magneten aufweist.

4. Motor nach einem der vorstehenden Ansprüche, **dadurch gekennzeichnet, dass** Sensoren (12) abwechselnd zwischen zwei Statorstangen (31, 31') angeordnet sind.

5. Motor nach einem der vorstehenden Ansprüche, **dadurch gekennzeichnet, dass** sich der innere Teil (314', 316'a, 316'b, 35) des Stators (20) vollständig in einem zylindrischen Raum (EC) erstreckt, der entlang der Achse (XX) zwischen den Scheiben (22a, 22b) eingerichtet ist, wobei dieser zylindrische Raum (EC) einen Durchmesser gleich dem Außendurchmesser (DI) des Motors (1) aufweist.

6. Motor nach einem der vorstehenden Ansprüche, **dadurch gekennzeichnet, dass** der Stator (30) einen Wechsel abgewinkelter Stangen (31'), die jeweils eine zu der Drehachse (XX) verlagerte Spule (35) tragen, und geradliniger Stangen (31), die keine Spule tragen, umfasst.

7. Motor nach einem der vorstehenden Ansprüche, **dadurch gekennzeichnet, dass** die Tragstruktur (32) aus zwei Teilen (32a, 32b) besteht, die parallel zu der Drehachse (XX) des Rotors ineinander verschachtelt sind, und dass die Tragstruktur (32) mit stellenweisen Aussparungen (39, 40) für die Passage der Teile (13) von Sensoren (12) und/oder das Halten von Metallstangen (31), die zu dem Stator gehören, versehen ist.

8. Motor nach einem der vorstehenden Ansprüche, **dadurch gekennzeichnet, dass** die Tragstruktur (32) Klötze (42c) umfasst, die mindestens einen Teil bestimmter Metallstangen (31') zur Aufnahme radialer Kräfte umrahmen.

9. Motor nach einem der vorstehenden Ansprüche, **dadurch gekennzeichnet, dass** er mindestens eine elastische Dichtung (33a, 33b), insbesondere einen O-Ring, umfasst, deren Außendurchmesser größer ist als der Außendurchmesser der Tragstruktur, wobei diese Letztere mindestens eine Nut (43a, 43b) umfasst, in der die Dichtung positioniert sein kann.

10. Motor nach einem der vorstehenden Ansprüche, **dadurch gekennzeichnet, dass** die Stangen (31, 31') einen Querschnitt aufweisen, der an die Magnete (24) derart angepasst ist, dass ein Luftspalt mit im Wesentlichen konstanter Dicke zwischen einer Stange und einem Magnet, wenn sie einander gegenüberliegen, eingerichtet ist.

11. Motor nach einem der vorstehenden Ansprüche, **dadurch gekennzeichnet, dass** der Außendurchmesser der Tragstruktur (32) kleiner oder gleich dem Außendurchmesser des Stators (30) ist.

12. Verschluss- oder Sonnenschutzanlage, die eine Verschlussblende und eine Antriebsbaugruppe umfasst, **dadurch gekennzeichnet, dass** die Antriebsbaugruppe einen Motor (1) nach einem der vorstehenden Ansprüche umfasst.

## Claims

1. Electric motor (1) comprising a rotor (20) and a wound stator (30), the rotor comprising

   - a shaft (21) and
   - two discs (22a, 22b) mounted fixed in rotation on the shaft and equipped with permanent magnets (24),

   an external portion (312a, 312b, 312'a, 312'b) of the stator extending axially at the level of each disc, parallel to an axis (XX) of rotation of the rotor and radially beyond this disc starting from the axis (XX), the stator (30) comprising

   - a plurality of separate bars (31, 31') which are produced in a magnetically conductive material and some parts of which form the external portion (312a, 312b, 312'a, 312'b) of the stator which extends axially at the level of each disc, parallel to an axis (XX) of rotation of the rotor and radially beyond this disc starting from the axis (XX), and
   - a carrier structure (32) holding the bars fixed relative to each other, the carrier structure being mounted with the possibility of rotation on the shaft (21) axially outside the two discs (22a, 22b),

   the external portion (312a, 312b, 312'a, 312'b) of the stator (30) extending, parallel to the axis (XX) of rotation of the rotor, axially outside the discs (22a, 22b) up to the level of the carrier structure (32), at least some (31') of the metallic bars being bent and supporting windings (35), the windings being at least partially inserted into a cylindrical space (EC') disposed, along the axis (XX), between the discs (22a, 22b) of the rotor (20), this cylindrical space (EC') having a diameter equal to the diameter (D22) of these discs,

the length (L35) of the windings (35), measured parallel to the axis of rotation (XX) of the rotor (20), being independent of the length (L24) of the magnets (24), measured parallel to this axis, or the internal part (314', 316'a, 316'b, 35) of the stator (30) comprising at least one winding (35) wound around a bar (31') made of magnetic material which likewise defines one part at least of the external portion (312'a, 312'b) of the stator, the bar (31') supporting the winding (35) being in particular bent (318'a, 318'b) in a direction where it displaces the winding (35) towards the axis (XX) of rotation of the rotor (20), relative to the external portion (312'a, 312'b) of the stator (30), or each winding (35) being centred on an axis (X35) parallel to the axis of rotation (XX) and offset radially relative to the latter, each winding being disposed in an angular sector relative to the axis of rotation,

the maximum external diameter (D1) of the motor (1) in the housing thereof being equal to or slightly greater than an ideal diameter (DI), itself equal to the sum of the maximum diameter (DR) of the rotor, of twice the maximum thickness (ES) of an external part (312a, 312b, 312'a, 312'b) of a bar (31, 31') of the stator at the level of the discs (22a, 22b) and of twice an air gap (E) disposed between the external part of the stator and the magnets (24) of the rotor and the bars (31, 31') having at least one zone (34) of lower radial thickness, at the level of their positioning part on the carrier structure (32) and/or in alignment with the discs (22a, 22b) of the rotor (20).

2. Motor according to claim 1, **characterised in that** the permanent magnets (24) are disposed with the direction of polarity (D24) thereof orientated radially relative to the axis of rotation (XX), and **in that** the magnets (24) of one (22a) of the discs are disposed in opposition relative to the magnets (24) of the other disc (22b).

3. Motor according to one of the preceding claims, **characterised in that** the magnets (24) are disposed on the external periphery of the discs (22a, 22b) of the rotor (20), and **in that** the external periphery of the discs (22a, 22b) of the rotor (20) is polygonal, having flat zones for the positioning of magnets of a parallelepipedic shape.

4. Motor according to one of the preceding claims, **characterised in that** sensors (12) are disposed alternately, between two stator bars (31,31').

5. Motor according to one of the preceding claims, **characterised in that** the internal part (314', 316'a, 316'b, 35) of the stator (20) extends in total into a cylindrical space (EC) disposed along the axis (XX), between the discs (22a, 22b), this cylindrical space (EC) having a diameter equal to the external diameter (DI) of the motor (1).

6. Motor according to one of the preceding claims, **characterised in that** the stator (30) comprises an alternation of bent bars (31') each supporting a winding (35) displaced towards the axis of rotation (XX) and rectilinear bars (31) not supporting any winding.

7. Motor according to one of the preceding claims, **characterised in that** the carrier structure (32) is in two parts (32a, 32b), fitting one into the other, parallel to the axis (XX) of rotation of the rotor, and **in that** the carrier structure (32) is provided with localised recesses (39, 40) for the passage of parts (13) of sensors (12) and/or retaining metallic bars (31) belonging to the stator.

8. Motor according to one of the preceding claims, **characterised in that** the carrier structure (32) comprises studs (42c) framing a part of some metallic bars (31') at least, for absorbing radial loads.

9. Motor according to one of the preceding claims, **characterised in that** it comprises at least one elastic joint (33a, 33b), in particular an O-ring, the exterior diameter of which is greater than the external diameter of the carrier structure, the latter comprising at least one groove (43a, 43b) in which the joint can be positioned.

10. Motor according to one of the preceding claims, **characterised in that** the bars (31, 31') have a section adapted to the magnets (24) such that an air gap of an essentially constant thickness is disposed between a bar and a magnet when they are opposite each other.

11. Motor according to one of the preceding claims, **characterised in that** the external diameter of the carrier structure (32) is less than or equal to the external diameter of the stator (30).

12. Installation for closing or for solar protection comprising a screen for closing and a motorisation assembly, **characterised in that** the motorisation assembly comprises a motor (1) according to one of the preceding claims.

Fig. 1

Fig. 2

Fig. 3

Fig. 4

Fig. 5

Fig. 6

17

**EP 2 686 940 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4556809 A
- JP 2003088068 A
- DE 102006038576 A
- US 3153157 A